(19) Europäisches Patentamt
European Patent Office
Office européen des brevets

(11) **EP 3 109 426 B1**

(12) **EUROPEAN PATENT SPECIFICATION**

(45) Date of publication and mention
of the grant of the patent:
**27.12.2017 Bulletin 2017/52**

(51) Int Cl.:
***F01N 3/20*** *(2006.01)*

(21) Application number: **16175522.8**

(22) Date of filing: **21.06.2016**

(54) **EXHAUST GAS CONTROL APPARATUS**

ABGASSTEUERUNGSVORRICHTUNG

APPAREIL DE COMMANDE DE GAZ D'ÉCHAPPEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2015 JP 2015129132**

(43) Date of publication of application:
**28.12.2016 Bulletin 2016/52**

(73) Proprietor: **Toyota Jidosha Kabushiki Kaisha
Toyota-shi, Aichi-ken, 471-8571 (JP)**

(72) Inventors:
• **OKAMOTO, Naoya
TOYOTA-SHI, AICHI-KEN, 471-8571 (JP)**
• **TSUCHIYA, Tomihisa
TOYOTA-SHI, AICHI-KEN, 471-8571 (JP)**
• **NAKANO, Takanori
TOYOTA-SHI, AICHI-KEN, 471-8571 (JP)**

(74) Representative: **Intès, Didier Gérard André et al
Cabinet Beau de Loménie
158 rue de l'Université
75340 Paris Cedex 07 (FR)**

(56) References cited:
WO-A1-2010/003424     WO-A1-2015/049557
FR-A1- 3 012 518     US-A1- 2010 229 534

## Description

BACKGROUND OF THE INVENTION

1. Field of the Invention

The invention relates to an exhaust gas control apparatus that includes an adding valve which is disposed in an exhaust pipe of an internal combustion engine and supplies a reducing agent into the exhaust pipe.

2. Description of Related Art

An exhaust gas control apparatus that supplies a reducing agent into an exhaust pipe in order to purify exhaust gas of an internal combustion engine has been known. In an apparatus that is disclosed in Japanese Patent Application Publication No. JP 2003-301737 A, for example, an adding valve that supplies urea water as the reducing agent is disposed in the exhaust pipe and the urea water is supplied from the adding valve into the exhaust pipe so that nitrogen oxide (NOx) in the exhaust gas is removed by reduction by a NOx reduction catalyst. In this apparatus disclosed in JP 2003-301737 A, the amount of the urea water supplied from the adding valve is adjusted in accordance with an engine operation state such as an engine rotation speed and an accelerator operation amount.

The International Application WO 2015/049557 A1 discloses a device equipped with a urea addition valve that injects urea water to an exhaust passage of an engine, an NOx purification catalyst that purifies NOx through the addition of an additive from the urea addition valve, and a control unit that executes injection of the additive from the urea addition valve when a temperature of exhaust gas in the exhaust passage in a region upstream of the urea addition valve in an exhaust gas flow direction is equal to or higher than a predetermined temperature.

SUMMARY OF THE INVENTION

In the apparatus disclosed in JP 2003-301737 A, the adding valve is disposed in the exhaust pipe, and thus the temperature of the adding valve is increased by the heat of the exhaust gas of the internal combustion engine. Still, when the reducing agent is supplied from the adding valve, the adding valve is cooled by heat exchange with the reducing agent flowing through the adding valve.

In the above-described apparatus, the exhaust pipe has a heat capacity. Accordingly, in a case where the amount of the heat that is given to the exhaust pipe and to the adding valve from the exhaust gas (specifically, from the exhaust gas temperature and from the exhaust gas flow rate) changes with a change in the engine operation state, the temperature of the exhaust pipe and the temperature of the adding valve change with a delay.

Accordingly, in a case where the reducing agent supply amount for the cooling of the adding valve is regulated in accordance with the engine operation state, the reducing agent supply amount might be subjected to an excess or to a deficiency during a transient operation in which the engine operation state changes. When the reducing agent supply amount is immediately reduced based on a change in the engine operation state to an operation state where a smaller amount of the heat is given from the exhaust gas to the exhaust pipe and the adding valve at a high adding valve temperature, for example, the temperature of the adding valve is not substantially reduced, the reducing agent supply amount decreases, and the reducing agent supply amount becomes insufficient.

In a case where the engine operation state changes, the reducing agent supply amount during the current reducing agent supply from the adding valve (=A+[B-A]xR) is set by, for example, a predetermined ratio R (for example, several percents) of the difference (B-A) between a previous supply amount (A) which is the reducing agent supply amount during the previous reducing agent supply from the adding valve and the reducing agent supply amount in accordance with the engine operation state after the change (B) being added to the previous supply amount (A). Then, the excess or deficiency of the reducing agent supply amount during the transient operation of the internal combustion engine can be prevented by the reducing agent supply amount for the cooling of the adding valve being gradually changed. When the internal combustion engine is not in operation, however, the amount of the reducing agent supplied from the adding valve is "0" with, for example, the reducing agent in the adding valve recovered to a storage tank. Accordingly, in an apparatus in which the reducing agent supply amount is gradually changed as described above, it takes a long period of time for the reducing agent supply amount to increase to an amount corresponding to the engine operation state when the engine operation state becomes a high-load operation state immediately after the internal combustion engine stops operating and then the internal combustion engine is restarted in a state where the adding valve temperature remains high. In this case, the reducing agent supply amount for the cooling of the adding valve might be insufficient and this might result in an excessive rise in the temperature of the adding valve.

This situation is common to any apparatus in which the reducing agent supply amount can become "0" as well as to apparatuses in which the reducing agent supply amount becomes "0" when the operation of the internal combustion engine is stopped. The invention provides an exhaust gas control apparatus that is capable of suppressing an excessive rise in an adding valve temperature which is attributable to a short supply of a reducing agent.

An exhaust gas control apparatus according to appended claim 1 includes an adding valve configured to supply a reducing agent into an exhaust pipe of an internal combustion engine, a NOx reduction catalyst configured to remove NOx by the reducing agent being supplied from the adding valve, the NOx reduction catalyst being disposed on an exhaust downstream side of the adding valve in the exhaust pipe, a control device comprising an instantaneous value calculation unit configured to calculate a target instantaneous supply amount based on an engine operation state, the target instantaneous supply amount being a reducing agent supply amount for cooling the adding valve, and the control device further comprising a control unit configured to execute an operation control for the adding valve by considering a target cooling supply amount as an amount obtained by a part of a difference between a previous target cooling supply amount and the target instantaneous supply amount, said part being added to the previous target cooling supply amount, the target cooling supply amount being a target reducing agent supply amount for the cooling of the adding valve and the previous target cooling supply amount being the target cooling supply amount calculated during a previous calculation, the exhaust gas control apparatus being characterized in that the control unit executes the operation control for the adding valve by using the target instantaneous supply amount as the target cooling supply amount as it is when a temperature as an index of a temperature of the adding valve is equal to or higher than a predetermined temperature and the previous target cooling supply amount is "0".

When the previous target cooling supply amount that is the target cooling supply amount calculated during the previous calculation is "0", the amount obtained by the part of the difference between the target instantaneous supply amount calculated by the instantaneous value calculation unit and the previous target cooling supply amount being added to the previous target cooling supply amount is used as the target cooling supply amount as described above, and then a gradual change in the target cooling supply amount might lead to a shortage of the reducing agent supply amount. When the temperature that is the index of the temperature of the adding valve is high, an excessive rise in the temperature of the adding valve might be caused in the case of the shortage of the reducing agent supply amount.

According to the above-described apparatus, the target instantaneous supply amount that is an amount which is calculated based on the engine operation state is used as the target cooling supply amount as it is when the excessive rise in the adding valve temperature attributable to the shortage of the reducing agent supply amount might be caused. Accordingly, the reducing agent equivalent in amount to the engine operation state at that time can be supplied into the exhaust pipe from the adding valve. Accordingly, the shortage of the reducing agent supply amount that is attributable to a gradual increase in the reducing agent supply amount during an initiation of the reducing agent supply can be prevented and the excessive rise in the temperature of the adding valve that is attributable to a short supply of the reducing agent can be prevented.

In the exhaust gas control apparatus described above, it is preferable that the control unit calculates a target purification supply amount as a target reducing agent supply amount for the NOx reduction by the NOx reduction catalyst, executes the operation control for the adding valve such that the reducing agent equal in amount to the target cooling supply amount is supplied when the target cooling supply amount exceeds the target purification supply amount, and executes the operation control for the adding valve such that the reducing agent equal in amount to the target purification supply amount is supplied when the target cooling supply amount is equal to or smaller than the target purification supply amount.

In the above-described apparatus, the target cooling supply amount that is the reducing agent supply amount required for the cooling of the adding valve and the target purification supply amount that is the reducing agent supply amount required for the NOx reduction by the NOx reduction catalyst are separately calculated and the operation control for the adding valve is executed based on the larger one of the supply amounts. In this manner, the reducing agent equal in amount to the target purification supply amount is supplied from the adding valve when the target purification supply amount exceeds the target cooling supply amount, and thus the NOx in exhaust gas of the internal combustion engine can be removed by reduction by the supplied reducing agent and the adding valve can be sufficiently cooled. When the target cooling supply amount exceeds the target purification supply amount, the reducing agent that is equal in amount to the target cooling supply amount is supplied from the adding valve, and thus the adding valve can be cooled through the supply and the NOx in the exhaust gas of the internal combustion engine can be sufficiently removed by reduction. As described above, according to this apparatus, both the function of the cooling of the adding valve and the function of the NOx reduction can be performed.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic drawing illustrating an internal combustion engine to which an embodiment of an exhaust gas control apparatus is applied and peripheral configurations thereof;
FIG. 2 is a flowchart illustrating an execution procedure of a purification supply amount calculation processing that is executed by the exhaust gas control apparatus according to this embodiment;
FIG. 3 is a flowchart illustrating an execution procedure of a cooling supply amount calculation processing that is executed by the exhaust gas control apparatus according to this embodiment;

FIG. 4 is a flowchart illustrating an execution procedure of an operation control processing that is executed by the exhaust gas control apparatus according to this embodiment;

FIG. 5 is a timing chart illustrating an example of how the cooling supply amount calculation processing is executed while the internal combustion engine is in operation; and

FIG. 6 is a timing chart illustrating an example of how the cooling supply amount calculation processing is executed when the internal combustion engine is started.

DETAILED DESCRIPTION OF EMBODIMENTS

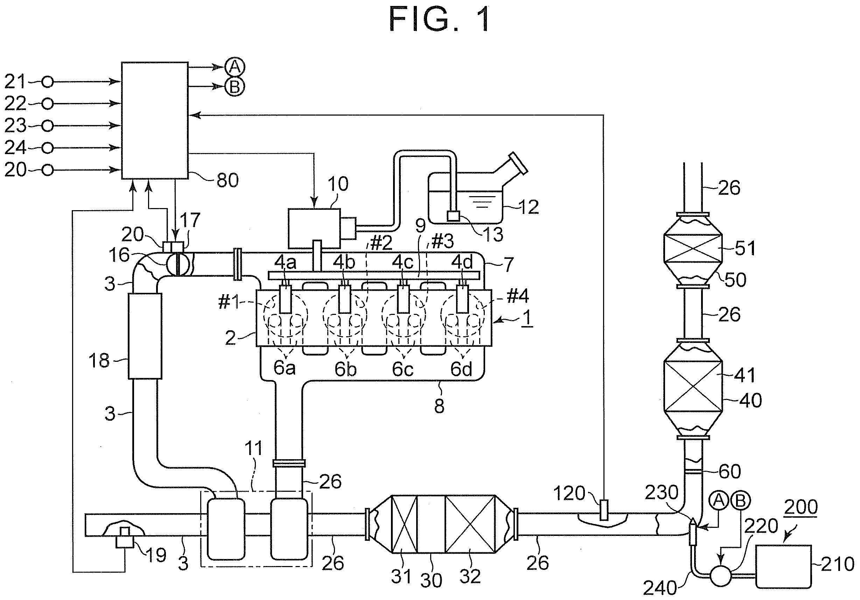

Hereinafter, an embodiment of an exhaust gas control apparatus will be described. As illustrated in FIG. 1, an internal combustion engine 1 has a plurality of cylinders #1 to #4. A plurality of fuel injection valves 4a to 4d are attached to a cylinder head 2. These fuel injection valves 4a to 4d inject a fuel into combustion chambers of the respective cylinders #1 to #4. In addition, an intake port for introducing fresh air into the cylinders and exhaust ports 6a to 6d for discharging combustion gas out of the cylinders are disposed in the cylinder head 2 to correspond to the respective cylinders #1 to #4.

The fuel injection valves 4a to 4d are connected to a common rail 9 that accumulates the high-pressure fuel. The common rail 9 is connected to a fuel tank 12 via a supply pump 10 and a feed pump 13. The fuel in the fuel tank 12 is pumped up by the feed pump 13 and is supplied to the supply pump 10. This supplied fuel is suctioned by the supply pump 10 and is pressure-fed to the common rail 9. When the fuel injection valves 4a to 4d are open, the high-pressure fuel that is supplied to the common rail 9 in this manner is injected into the cylinders from the respective fuel injection valves 4a to 4d.

An intake manifold 7 is connected to the intake port. The intake manifold 7 is connected to an intake pipe 3. An intake throttle valve 16 for suctioned air amount adjustment is disposed in the intake pipe 3.

An exhaust manifold 8 is connected to the exhaust ports 6a to 6d. The exhaust manifold 8 is connected to an exhaust pipe 26. A turbocharger 11, which supercharges suctioned air introduced into the cylinders of the internal combustion engine 1 by using an exhaust gas pressure, is disposed in the middle of the exhaust pipe 26. On the intake pipe 3, an intercooler 18 is disposed between an intake side compressor of the turbocharger 11 and the intake throttle valve 16. The intercooler 18 cools the suctioned air with a temperature raised by the supercharging by the turbocharger 11.

A first purification member 30 that purifies exhaust gas is disposed on the exhaust downstream side of an exhaust side turbine of the turbocharger 11 and in the middle of the exhaust pipe 26. In the first purification member 30, an oxidation catalyst 31 and a filter 32 are arranged in series with respect to a direction in which the exhaust gas flows.

A catalyst that performs an oxidation treatment on HC in the exhaust gas is supported on the oxidation catalyst 31. The filter 32 is a member that collects particulate matter (PM) in the exhaust gas and is configured to use porous ceramic. A catalyst that promotes PM oxidation is supported on the filter 32. The PM in the exhaust gas is collected when the exhaust gas passes through a porous wall of the filter 32.

A second purification member 40 that purifies the exhaust gas is disposed on the exhaust downstream side of the first purification member 30 and in the middle of the exhaust pipe 26. A selective reduction-type NOx reduction catalyst (hereinafter, referred to as a SCR catalyst) 41 that reduction-purifies NOx in the exhaust gas by using a reducing agent is arranged in the second purification member 40.

A third purification member 50 that purifies the exhaust gas is disposed on the exhaust downstream side of the second purification member 40 and in the middle of the exhaust pipe 26. An ammonia oxidation catalyst 51 that purifies ammonia in the exhaust gas is arranged in the third purification member 50.

A urea water supply mechanism 200 for supplying urea water as the reducing agent to the SCR catalyst 41 is disposed in the internal combustion engine 1. A tank 210 that stores the urea water, a urea adding valve 230 that injects and supplies the urea water into the exhaust pipe 26, a supply passage 240 that connects the urea adding valve 230 and the tank 210 to each other, and a pump 220 that is disposed in the middle of the supply passage 240 constitute the urea water supply mechanism 200.

The urea adding valve 230 is disposed between the first purification member 30 and the second purification member 40 on the exhaust pipe 26. The urea adding valve 230 has an injection hole directed toward the SCR catalyst 41. When the urea adding valve 230 is open, the urea water is injected and supplied into the exhaust pipe 26 via the supply passage 240. When the urea water is injected and supplied from the urea adding valve 230, the urea adding valve 230 is cooled by heat exchange with the urea water that is supplied from the tank 210 and has a relatively low temperature and latent heat associated with evaporation of the urea water supplied into the exhaust pipe 26.

The pump 220 is an electric pump. During a positive rotation of the pump 220, the pump 220 feeds the urea water toward the urea adding valve 230 from the tank 210. During a reverse rotation of the pump 220, the pump 220 feeds the urea water toward the tank 210 from the urea adding valve 230. In other words, during the reverse rotation of the pump 220, the urea water is recovered from the urea adding valve 230 and the supply passage 240 and is returned to the tank 210. In this embodiment, the pump 220 is driven in reverse rotation and the urea water in the urea adding valve 230 is recovered into the tank 210 once the internal combustion engine 1 stops operating. When the internal combustion engine 1 is started, in contrast, the pump 220 is driven in positive rotation and the urea adding valve 230 is filled with the urea water.

The urea water that is injected from the urea adding valve 230 turns into ammonia after being hydrolyzed by heat of the exhaust gas. This ammonia is supplied to the SCR catalyst 41. This ammonia that is supplied to the SCR catalyst 41 is adsorbed onto the SCR catalyst 41 and is used for NOx reduction. Some of the hydrolyzed ammonia is directly used for NOx reduction before being adsorbed onto the SCR catalyst 41.

Various sensors for engine operation state detection are attached to the internal combustion engine 1. For example, an air flow meter 19 detects the amount of intake air flowing through the intake pipe 3 (suctioned air amount GA). A vehicle speed sensor 20 detects a vehicle traveling speed SPD. An engine rotation speed sensor 21 detects a crankshaft rotation speed (engine rotation speed NE). An operation switch 22 detects a starting operation and a stopping operation for the internal combustion engine 1 by a driver of a vehicle. A water temperature sensor 23 detects a cooling water temperature THW of the internal combustion engine 1. An accelerator sensor 24 detects an operation amount of an accelerator operation member (accelerator operation amount ACCP). On the exhaust pipe 26, an exhaust gas temperature sensor 120 is disposed on the exhaust upstream side of the urea adding valve 230 between the first purification member 30 and the second purification member 40. The exhaust gas temperature sensor 120 detects an exhaust gas temperature THE, which is the temperature of the exhaust gas that has yet to flow into the SCR catalyst 41.

Outputs from the various sensors and the like are input to a control device 80. This control device 80 is configured to have a microcomputer as a main component. The microcomputer is provided with a central processing unit (CPU), a read-only memory (ROM) in which various programs, maps, and the like are stored in advance, a random access memory (RAM) that temporarily stores a calculation result of the CPU and the like, an input interface, an output interface, and the like. Electric power is supplied from a battery to the control device 80 and the various sensors described above. In this embodiment, the control device 80 functions as a control unit and an instantaneous value calculation unit.

Various types of controls for the internal combustion engine 1 are performed by the control device 80, examples of which include valve opening controls for the fuel injection valves 4a to 4d, a discharge pressure control for the supply pump 10, and a driving amount control for an actuator 17 that opens and closes the intake throttle valve 16.

In addition, the control device 80 executes an operation control for the urea adding valve 230. Hereinafter, a series of processing relating to the operation control for the urea adding valve 230 will be described. First, a processing for calculating a target purification supply amount TQn (purification supply amount calculation processing), which is a target urea water supply amount for NOx reduction in the SCR catalyst 41, will be described.

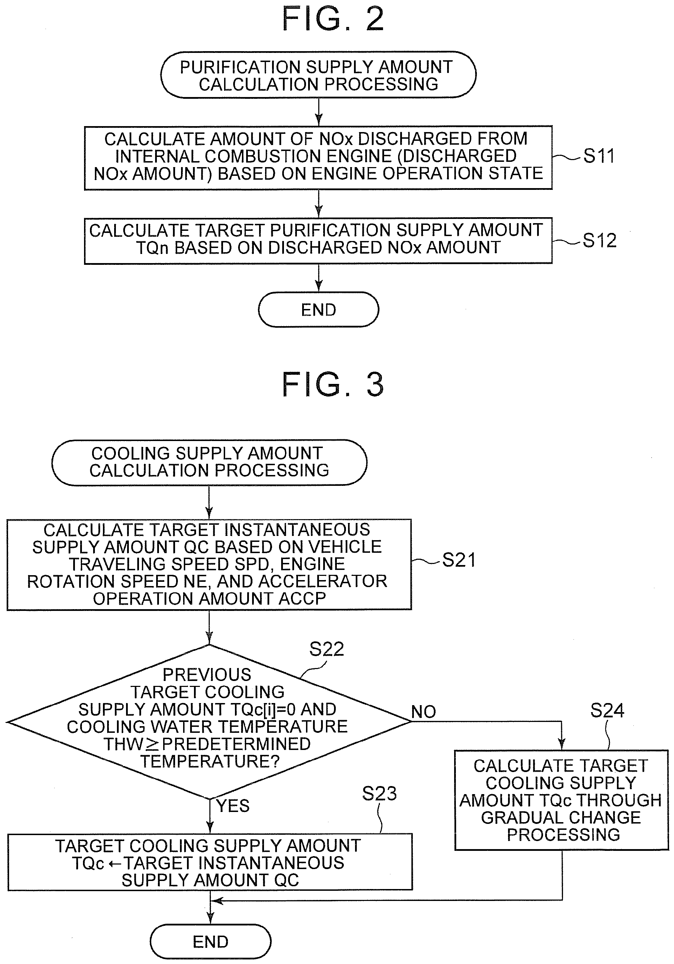

FIG. 2 shows an execution procedure of the purification supply amount calculation processing. A series of processing that is illustrated in the flowchart of FIG. 2 is executed by the control device 80 as an interrupt processing which has a predetermined cycle. As illustrated in FIG. 2, in this processing, the amount of the NOx that is discharged from the internal combustion engine 1 (discharged NOx amount) is calculated based on the suctioned air amount GA and the engine rotation speed NE (Step S11). In this embodiment, a relationship among the suctioned air amount GA, the engine rotation speed NE, and the discharged NOx amount is obtained in advance based on various experiment and simulation results and this relationship is stored in the control device 80. In the processing of Step S11, the discharged NOx amount is calculated based on this relationship. Specifically, a larger amount is calculated as the discharged NOx amount as the suctioned air amount GA increases and the engine rotation speed NE increases. Then, the target purification supply amount TQn is calculated based on the discharged NOx amount (Step S12). In the processing of Step S12, a urea water supply amount with no excess or deficiency that is required for a reduction treatment of the NOx discharged from the internal combustion engine 1 is calculated as the target purification supply amount TQn. After the processing of Step S 12, this processing is temporarily terminated.

Hereinafter, a processing for calculating a target cooling supply amount TQc (cooling supply amount calculation processing), which is a target urea water supply amount for the cooling of the urea adding valve 230, will be described. FIG. 3 shows an execution procedure of the cooling supply amount calculation processing. A series of processing that is illustrated in the flowchart of FIG. 3 is executed by the control device 80 as an interrupt processing which has a predetermined cycle.

As illustrated in FIG. 3, in this processing, a target instantaneous supply amount QC is calculated first based on an engine operation state such as the vehicle traveling speed SPD, the engine rotation speed NE, and the accelerator operation amount ACCP (Step S21). A urea water supply amount with no excess or deficiency that is required for the temperature of the urea adding valve 230 which is exposed to the high-temperature exhaust gas to be kept below an upper limit temperature in a temperature compensation range in a case where the internal combustion engine 1 is assumed to be in a steady operation state is calculated as the target instantaneous supply amount QC. Specifically, when the accelerator operation amount ACCP is at a medium or higher level in an operation range (when the engine operation state has a medium or higher level of load) and when the engine rotation speed NE is at a medium or higher level in its range of change (when the engine operation state has a medium or higher level of rotation), a large amount of heat is given from the exhaust gas to the exhaust pipe 26 and the urea adding valve 230, and thus a positive value is calculated as the target instantaneous supply amount QC. At this time, a large amount is calculated as the target instantaneous supply amount QC, such that a degree of the cooling of the urea adding valve 230 increases, because the amount of the heat increases as the engine rotation speed NE increases and the accelerator operation amount ACCP increases. When the engine rotation speed NE is low and the accelerator operation amount ACCP is small in the engine operation state (low-load low-rotation state), the amount of the heat that is given from the exhaust gas to the exhaust pipe 26 and the urea adding valve 230 decreases, and thus "0" is calculated as the target instantaneous supply amount QC. In addition, a smaller amount is calculated as the target instantaneous supply amount QC, such that the degree of the cooling of the urea adding valve 230 decreases, because a cooling effect attributable to traveling wind is anticipated in this case as the vehicle traveling speed SPD increases.

After the processing of Step S21, it is determined whether or not both the following (condition a) and (condition b) are satisfied (Step S22). (condition a) A previous target cooling supply amount TQc[i], which is the target cooling supply amount TQc calculated during the previous execution of this processing, being "0". (condition b) The cooling water temperature THW being equal to or higher than a predetermined temperature.

In a case where both the (condition a) and the (condition b) are satisfied (Step S22: YES), the target instantaneous supply amount QC calculated in the processing of Step S21 is calculated as the target cooling supply amount TQc (Step S23).

In a case where at least one of the (condition a) and the (condition b) is not satisfied (Step S22: NO), a processing for gradually changing the target cooling supply amount TQc with respect to a change in the engine operation state (gradual change processing) is executed (Step S24). Specifically, the target cooling supply amount TQc during the current execution of this processing is calculated, as in the following relational expression (1), by a predetermined ratio R (1% in this embodiment) of the difference between the previous target cooling supply amount TQc[i] and the target instantaneous supply amount QC calculated in the processing of Step S21 being added to the previous target cooling supply amount TQc[i].

$$TQc=TQc[i]+\{QC-TQc[i]\}\times R\ldots(1)$$

After the target cooling supply amount TQc is calculated as described above, this processing is temporarily terminated.

In this embodiment, a range of the cooling water temperature THW in which the temperature of the urea adding valve 230 can become equal to or higher than the upper limit temperature in the temperature compensation range in a case where the target cooling supply amount TQc is gradually increased from "0" with respect to the change in the engine operation state is obtained in advance based on various experiment and simulation results. A lower limit value of the range of the cooling water temperature THW is stored in the control device 80 as the predetermined temperature according to the above-described (condition b).

In the apparatus according to this embodiment, the exhaust pipe 26 has a heat capacity. Accordingly, in a case where the amount of the heat that is given to the exhaust pipe 26 and the urea adding valve 230 from the exhaust gas (specifically, exhaust gas temperature and exhaust gas flow rate) changes with the change in the engine operation state, the temperature of the exhaust pipe 26 and the temperature of the urea adding valve 230 change with a delay. Accordingly, if urea water that is equal in amount to the target instantaneous supply amount QC is injected and supplied from the urea adding valve 230, the urea water supply amount might be subjected to an excess or deficiency during a transient operation in which the engine operation state changes. In this embodiment, the target cooling supply amount TQc is calculated based on the relational expression (1), the target cooling supply amount TQc is gradually changed with respect to the change in the engine operation state, and thus the urea water supply amount for the cooling of the urea adding valve 230 is gradually changed in a case where the engine operation state changes. Accordingly, the excess or deficiency of the urea water supply amount during the transient operation of the internal combustion engine 1 is prevented.

Hereinafter, a processing for executing the operation control for the urea adding valve 230 (operation control processing) based on the target purification supply amount TQn calculated through the purification supply amount calculation processing (refer to FIG. 2) and the target cooling supply amount TQc calculated through the cooling supply amount calculation processing (refer to FIG. 3) will be described.

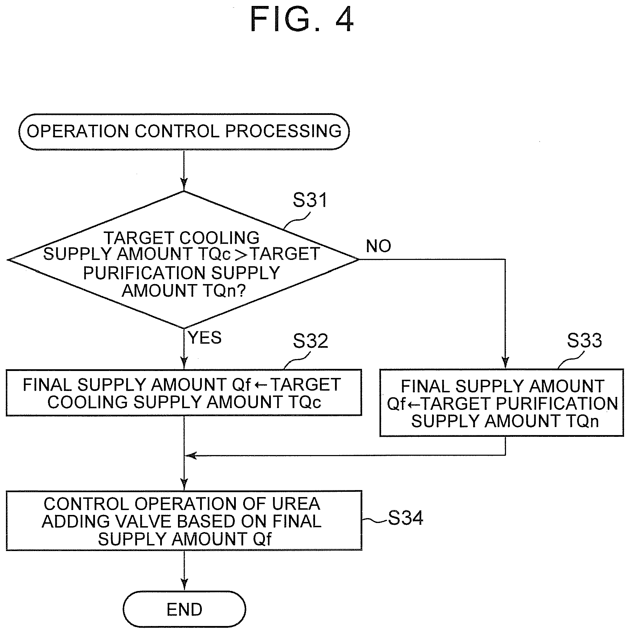

FIG. 4 shows an execution procedure of the operation control processing. A series of processing that is illustrated in the flowchart of FIG. 4 is executed by the control device 80 as an interrupt processing which has a predetermined cycle. As illustrated in FIG. 4, in this processing, it is determined first whether or not the target cooling supply amount TQc exceeds the target purification supply amount TQn (Step S31). When the target cooling supply amount TQc exceeds the target purification supply amount TQn (Step S31: YES), the target cooling supply amount TQc is set as a control target value (final supply amount Qf) for the amount of the urea water injected from the urea adding valve 230 (Step S32). When the target cooling supply amount TQc is equal to or smaller than the target purification supply amount TQn (Step S31: NO), the target purification supply amount TQn is set as the final supply amount Qf (Step S33). Then, an operation of the urea adding valve 230 is controlled such that the urea water equal in amount to the final supply amount Qf set as described above is injected from the urea adding valve 230 (Step S34).

(Effect) Hereinafter, an effect of the execution of the operation control for the urea adding valve 230 described above will be described.

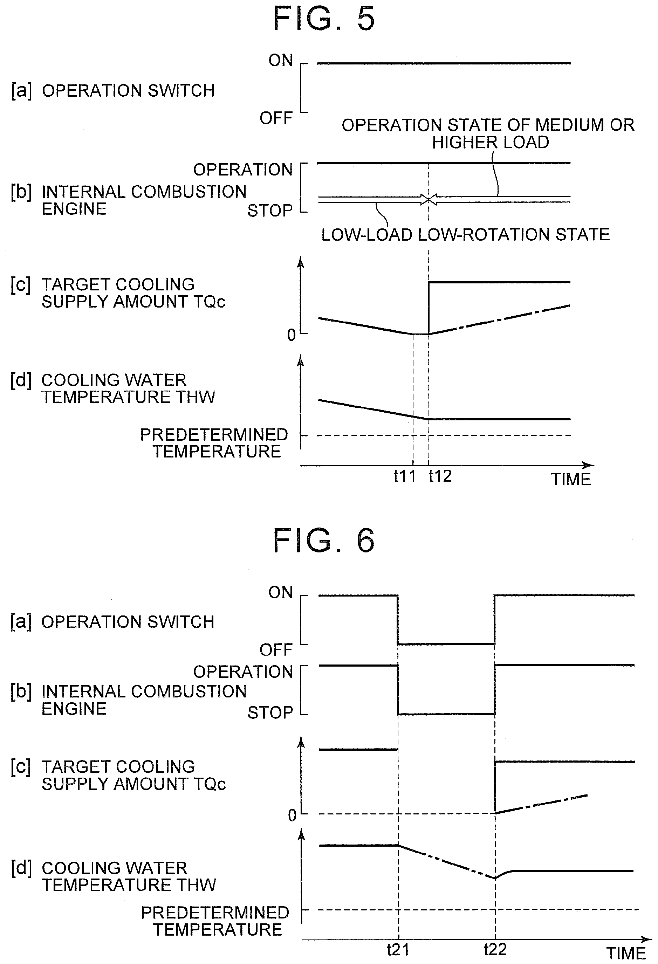

FIG. 5 is a timing chart illustrating an example of how the cooling supply amount calculation processing is executed while the internal combustion engine 1 is in operation. In the example that is illustrated in FIG. 5, the operation switch 22 (FIG. 5[a]) remains in an ON operation before time t11. At this time, the operation of the internal combustion engine 1 (FIG. 5[b]) in the low-load low-rotation state continues and the target cooling supply amount TQc (FIG. 5[c]) gradually decreases. Then, at time t11, the target cooling supply amount TQc (FIG. 5[c]) becomes "0". At this time, the cooling water temperature THW (FIG. 5[d]) is equal to or higher than the predetermined temperature.

In this example, the accelerator operation member is operated and the operation state of the internal combustion engine 1 becomes a state of a medium or higher load at time t12. At this time, the target cooling supply amount TQc calculated during the previous execution of the cooling supply amount calculation processing (previous target cooling supply amount TQc[i]) is "0" and the cooling water temperature THW is equal to or higher than the predetermined temperature. Accordingly, the target instantaneous supply amount QC calculated at this time is set as the target cooling supply amount TQc as it is.

The one-dot chain line in FIG. 5 shows, as a comparative example, a transition of the target cooling supply amount TQc in a case where the supply of the urea water from the urea adding valve 230 is initiated in a situation in which the previous target cooling supply amount TQc[i] is "0" and then the target cooling supply amount TQc is gradually changed from "0" in accordance with the above-described relational expression (1). In this case, time takes until the target cooling supply amount TQc reaches an amount corresponding to the engine operation state after the supply of the urea water from the urea adding valve 230 is initiated with the internal combustion engine 1 put into the operation state of the medium or higher load (time t12), and thus a shortage of the amount of the urea water that is supplied into the exhaust pipe 26 from the urea adding valve 230 for the cooling of the urea adding valve 230 might be caused. When the cooling water temperature THW is high, a state where the exhaust pipe 26 has a high internal temperature and the temperature of the exhaust pipe 26 itself is high is highly likely and a state where the temperature of the urea adding valve 230 is also high is highly likely, and thus an excessive rise in the temperature of the urea adding valve 230 might be caused in a case where the urea water supply amount is insufficient. In this embodiment, the cooling water temperature THW corresponds to a temperature that is an index of the temperature of the urea adding valve 230.

In this embodiment, the target cooling supply amount TQc becomes the amount corresponding to the engine operation state (target instantaneous supply amount QC) when the previous target cooling supply amount TQc[i] is "0" and the cooling water temperature THW is equal to or higher than the predetermined temperature, that is, when the excessive rise in the temperature of the urea adding valve 230 which is attributable to the shortage of the urea water supply amount might be caused (time t12). Accordingly, the urea water that is equivalent in amount to the amount corresponding to the engine operation state (same amount as the target instantaneous supply amount QC) determined by the accelerator operation amount ACCP, the engine rotation speed NE, and the vehicle traveling speed SPD at that time can be supplied into the exhaust pipe 26 from the urea adding valve 230. Accordingly, the shortage of the urea water supply amount that is attributable to a gradual increase in the urea water supply amount during a transition of the operation state of the internal combustion engine 1 to the state of the medium or higher load can be prevented, and the excessive rise in the temperature of the urea adding valve 230 that is attributable to a short supply of the urea water can be prevented.

FIG. 6 is a timing chart illustrating an example of how the cooling supply amount calculation processing is executed when the internal combustion engine 1 is started. In the example that is illustrated in FIG. 6, the operation switch 22 (FIG. 6[a]) is operated to be turned ON and the internal combustion engine 1 (FIG. 6[b]) is in operation before time t21. Then, a positive value is calculated as the target cooling supply amount TQc (FIG. 6[c]) at this time, and the urea water supply from the urea adding valve 230 is executed. The cooling water temperature THW (FIG. 6[d]) at this time is equal to or higher than the predetermined temperature.

Once the operation switch 22 is operated to be turned OFF at time t21, the internal combustion engine 1 stops operating. At this time, the electric power supply from the battery to the control device 80 is blocked. Subsequently, the temperature of the cooling water (refer to the two-dot chain line in FIG. 6[d]) gradually decreases with a decrease in the temperature of the internal combustion engine 1.

Then, once the operation switch 22 is operated to be turned ON at time t22, the internal combustion engine 1 is started. At this time, the electric power supply from the battery to the control device 80 is initiated and the control device 80 is started, and thus the target cooling supply amount TQc and the previous target cooling supply amount TQc[i] stored in the control device 80 are reset and become an initial value of "0".

In this example, the cooling water temperature THW is equal to or higher than the predetermined temperature, and thus the target instantaneous supply amount QC calculated at this time is set as the target cooling supply amount TQc as it is. The one-dot chain line in FIG. 6 shows, as a comparative example, a transition of the target cooling supply amount TQc in a case where the supply of the urea water from the urea adding valve 230 is initiated in a situation in which the previous target cooling supply amount TQc[i] is "0" and then the target cooling supply amount TQc is gradually changed from "0" in accordance with the above-described relational expression (1). In this case, time takes until the target cooling supply amount TQc reaches an amount corresponding to the engine operation state after the supply of the urea water from the urea adding valve 230 is initiated with the internal combustion engine 1 started (time t22), and thus a shortage of the amount of the urea water that is supplied into the exhaust pipe 26 from the urea adding valve 230 for the cooling of the urea adding valve 230 might be caused. When the cooling water temperature THW is high, a state where the exhaust pipe 26 has a high internal temperature and the temperature of the exhaust pipe 26 itself is high is highly likely and a state where the temperature of the urea adding valve 230 is also high is highly likely, and thus an excessive rise in the temperature of the urea adding valve 230 might be caused in a case where the urea water supply amount is insufficient.

In this embodiment, the target cooling supply amount TQc becomes the urea water supply amount corresponding to the engine operation state (target instantaneous supply amount QC) when the previous target cooling supply amount TQc[i] is "0" during the start of the internal combustion engine 1 and the cooling water temperature THW is equal to or higher than the predetermined temperature, that is, when the excessive rise in the temperature of the urea adding valve 230 which is attributable to the shortage of the urea water supply amount might be caused (time t22). Accordingly, the urea water that is equivalent in amount to the amount corresponding to the engine operation state (same amount as the target instantaneous supply amount QC) determined by the accelerator operation amount ACCP, the engine rotation speed NE, and the vehicle traveling speed SPD at that time can be supplied into the exhaust pipe 26 from the urea adding valve 230. Accordingly, the shortage of the urea water supply amount that is attributable to a gradual increase in the urea water supply amount during the start of the internal combustion engine 1 can be prevented, and the excessive rise in the temperature of the urea adding valve 230 that is attributable to a short supply of the urea water can be prevented.

In this embodiment, the target purification supply amount TQn that is the urea water supply amount for the reduction of the NOx in the SCR catalyst 41 is calculated through the purification supply amount calculation processing (refer to FIG. 2) and the target cooling supply amount TQc that is the urea water supply amount required for the cooling of the urea adding valve 230 is separately calculated through the cooling supply amount calculation processing (refer to FIG. 3). Then, the urea water injection from the urea adding valve 230 is executed based on the larger one of these supply amounts (final supply amount Qf).

Accordingly, the urea water that is equal in amount to the target purification supply amount TQn is supplied from the urea adding valve 230 when the target cooling supply amount TQc is equal to or smaller than the target purification supply amount TQn, and thus the NOx in the exhaust gas of the internal combustion engine 1 can be removed by reduction by the supplied urea water and the urea adding valve 230 can be sufficiently cooled. When the target cooling supply amount TQc exceeds the target purification supply amount TQn, the urea water that is equal in amount to the target cooling supply amount TQc is supplied from the urea adding valve 230, and thus the urea adding valve 230 can be cooled through the supply and the NOx in the exhaust gas of the internal combustion engine 1 can be sufficiently removed by reduction. As described above, according to the apparatus of this embodiment, both the function of the cooling of the urea adding valve 230 and the function of the reduction of the NOx in the exhaust gas of the internal combustion engine 1 can be performed.

As described above, the following effects can be achieved by this embodiment.

(1) When the operation state of the internal combustion engine 1 is subjected to the transition from the low-load low-rotation state to the state of the medium or higher load and when the internal combustion engine 1 is started, the shortage of the urea water supply amount that is attributable to a gradual increase in the urea water supply amount can be prevented and the excessive rise in the temperature of the urea adding valve 230 that is attributable to a short supply of the urea water can be prevented.

(2) The target cooling supply amount TQc and the target purification supply amount TQn are separately calculated and the urea water injection from the urea adding valve 230 is executed based on the larger one of these supply amounts (final supply amount Qf). Accordingly, both the function of the cooling of the urea adding valve 230 and the function of the reduction of the NOx in the exhaust gas of the internal combustion engine 1 can be performed whether in a case where the target cooling supply amount TQc is equal to or smaller than the target purification supply amount TQn or in a case where the target cooling supply amount TQc exceeds the target purification supply amount TQn.

The above-described embodiment may be put into practice after being modified as follows as well. The configuration in which the target instantaneous supply amount QC is used as the target cooling supply amount TQc as it is when both the (condition a) and the (condition b) are satisfied can also be applied to an apparatus in which the target instantaneous supply amount QC calculated in the low-load low-rotation state is a positive value instead of "0" or an apparatus in which the previous target cooling supply amount TQc[i] at a time of the start of the internal combustion engine 1 does not become "0" insofar as the previous target cooling supply amount TQc[i] can become "0" in the apparatus.

The configuration in which the target instantaneous supply amount QC calculated in Step S21 of the cooling supply amount calculation processing (FIG. 3) when both the (condition a) and the (condition b) are satisfied is used as the target cooling supply amount TQc as it is can be applied insofar as the previous target cooling supply amount TQc[i] can become "0" in the apparatus. Examples of this apparatus are considered to include an apparatus in which the supply of the urea water from the urea adding valve 230 is temporarily stopped in compliance with the execution of a control for temporarily stopping fuel supply to the internal combustion engine 1 during a deceleration operation (fuel cut control) and an apparatus in which the supply of the urea water from the urea adding valve 230 is stopped when the SCR catalyst 41 has a low bed temperature. Even in such apparatuses, the shortage of the urea water supply amount that is attributable to a gradual increase in the urea water supply amount during urea water supply resumption can be prevented and the excessive rise in the temperature of the urea adding valve 230 that is attributable to a short supply of the urea water can be prevented.

Any method can be adopted as a method for calculating the target purification supply amount TQn. As calculation parameters that are used for the calculation of the target purification supply amount TQn, not only the engine rotation speed NE and the suctioned air amount GA but also the bed temperature of the SCR catalyst 41 that is estimated based on the exhaust gas temperature THE, the accelerator operation amount ACCP, an opening degree of the intake throttle valve 16, and the like can be adopted. In addition, a detected value of the amount of the NOx that flows into the SCR catalyst 41 can be used as the calculation parameter with the value detected by a NOx sensor.

Any method can be adopted as a method for calculating the target cooling supply amount TQc. Engine operation states other than the vehicle traveling speed SPD, the engine rotation speed NE, and the accelerator operation amount ACCP can be used as calculation parameters that are used for the calculation of the target cooling supply amount TQc. Specific examples thereof include the suctioned air amount GA, the opening degree of the intake throttle valve 16, an outside air temperature, and the exhaust gas temperature.

Any condition can be defined instead of the above-described (condition b) of the "cooling water temperature THW being equal to or higher than the predetermined temperature" insofar as the condition allows a determination that the temperature which is the index of the temperature of the urea adding valve 230 is equal to or higher than the predetermined temperature. For example, the following (condition c) to (condition f) may be set instead of the (condition b). (condition c) The temperature of a lubricating oil of the internal combustion engine 1 being equal to or higher than the predetermined temperature. (condition d) The temperature of the internal combustion engine 1 detected by a temperature sensor being equal to or higher than the predetermined temperature. (condition e) The temperature of the urea adding valve 230 estimated based on the exhaust gas temperature being equal to or higher than the predetermined temperature. (condition f) The temperature of the urea adding valve 230 detected by a temperature sensor being equal to or higher than the predetermined temperature.

Any manner of calculation can be adopted as the manner in which the target cooling supply amount TQc is calculated in the processing of Step S24 of the cooling supply amount calculation processing (FIG. 3) insofar as an amount obtained by adding a part of the difference between the previous target cooling supply amount TQc[i] and the target instantaneous supply amount QC to the previous target cooling supply amount TQc[i] becomes the target cooling supply amount TQc. For example, a value that is calculated based on the length of time elapsed since a change in the engine operation state and a time constant determined in advance may be set as the predetermined ratio R in the above-described relational expression (1) instead of a constant value being set as the predetermined ratio R in the above-described relational expression (1). In addition, the target cooling supply amount TQc may be calculated from the following relational expression (2) based on the previous target cooling supply amount TQc[i], the target instantaneous supply amount QC, and an averaging coefficient N (N being a positive integer of at least "2").

$$TQc = \{TQc[i] \times (N-1) + QC\}/N \dots (2)$$

A reducing agent other than the urea water may be used as the reducing agent.

## Claims

1. An exhaust gas control apparatus comprising:

    an adding valve (230) configured to supply a reducing agent into an exhaust pipe of an internal combustion engine;
    a NOx reduction catalyst (41) configured to remove NOx by the reducing agent being supplied from the adding valve, the NOx reduction catalyst being disposed on an exhaust downstream side of the adding valve in the exhaust pipe;

a control device (80) comprising an instantaneous value calculation unit configured to calculate a target instantaneous supply amount (QC) based on an engine operation state, the target instantaneous supply amount being a reducing agent supply amount for cooling the adding valve; and

the control device (80) further comprising a control unit configured to execute an operation control for the adding valve by using a target cooling supply amount (TQc) as an amount obtained by a part of a difference between a previous target cooling supply amount (TQc[i]) and the target instantaneous supply amount, said part being added to the previous target cooling supply amount, the target cooling supply amount being a target reducing agent supply amount for the cooling of the adding valve, the previous target cooling supply amount being the target cooling supply amount calculated during a previous calculation, the exhaust gas control apparatus being **characterized in that**

the control unit is configured to execute the operation control for the adding valve by using the target instantaneous supply amount (QC) as the target cooling supply amount when a temperature as an index of a temperature of the adding valve is equal to or higher than a predetermined temperature and when the previous target cooling supply (TQc[i]) amount is "0".

2. The exhaust gas control apparatus according to claim 1,
   wherein the control unit is configured to

   i) calculate a target purification supply amount (TQn) as a target reducing agent supply amount for the NOx reduction by the NOx reduction catalyst,
   ii) execute the operation control for the adding valve such that the reducing agent equal in amount to the target cooling supply amount (TQc) is supplied when the target cooling supply amount exceeds the target purification supply amount, and
   iii) execute the operation control for the adding valve such that the reducing agent equal in amount to the target purification supply amount (TQn) is supplied when the target cooling supply amount is equal to or smaller than the target purification supply amount.

**Patentansprüche**

1. Abgassteuervorrichtung, umfassend:

ein Zugabeventil (230), das dazu ausgebildet ist, ein Reduktionsmittel in ein Auspuffrohr des Verbrennungsmotors zuzuführen,

einen NOx-Reduktionskatalysator (41), der dazu ausgebildet ist, mittels des Reduktionsmittels, das von dem Zugabeventil zugeführt wird, NOx zu entfernen, wobei der NOx-Reduktionskatalysator auf einer stromabwärtigen Auspuffseite des Zugabeventils in dem Auspuffrohr angeordnet ist,

eine Steuervorrichtung (80), die eine Momentanwertberechnungseinheit umfasst, die dazu ausgebildet ist, eine Zielmomentanzuführmenge (QC) basierend auf einem Motorbetriebszustand zu berechnen, wobei die Zielmomentanzuführmenge eine Reduktionsmittelzuführmenge zum Kühlen des Zugabeventils ist, und

wobei die Steuervorrichtung (80) ferner eine Steuereinheit umfasst, die dazu ausgebildet ist, eine Betriebssteuerung für das Zugabeventil durch Verwendung einer Zielkühlzuführmenge (TQc) als Menge, die durch einen Teil einer Differenz zwischen einer vorherigen Zielkühlzuführmenge (TQc[i]) und der Zielmomentanzuführmenge ermittelt wird, durchzuführen, wobei der Teil zu der vorherigen Zielkühlzuführmenge hinzuaddiert wird, wobei die Zielkühlzuführmenge eine Zielreduktionsmittelzuführmenge für das Kühlen des Zugabeventils ist, wobei die vorherige Zielkühlzuführmenge die Zielkühlzuführmenge, die während einer vorherigen Berechnung berechnet wurde, ist, wobei die Abgasreinigungsvorrichtung **dadurch gekennzeichnet ist, dass**:

die Steuereinheit dazu ausgebildet ist, die Betriebssteuerung für das Zugabeventil durch Verwendung der Zielmomentanzuführmenge (QC) als Zielkühlzuführmenge auszuführen, wenn eine Temperatur als Index einer Temperatur des Zugabeventils größer gleich einer vorbestimmten Temperatur ist und wenn die vorherige Zielkühlzuführmenge (TCc[i]) "0" beträgt.

2. Abgassteuervorrichtung nach Anspruch 1,
   wobei die Steuereinheit dazu ausgebildet ist,

   i) eine Zielreinigungszuführmenge (TQn) als Zielreduktionsmittelzuführmenge für die NOx-Reduktion durch den NOx-Reduktionskatalysator zu berechnen,
   ii) die Betriebssteuerung für das Zugabeventil derart auszuführen, dass das Reduktionsmittel mit der Zielkühlzuführmenge (TQc) mengengleich zugeführt wird, wenn die Zielkühlzuführmenge die Zielreinigungszuführmenge übersteigt, und
   iii) die Betriebssteuerung für das Zugabeventil derart auszuführen, dass das Reduktionsmittel mit der Zielreinigungszuführmenge (TQn) mengengleich zugeführt wird, wenn die Zielkühlzuführmenge kleiner gleich der Zielreinigungszuführmenge ist.

## Revendications

1. Appareil de commande de gaz d'échappement comportant :

une soupape d'addition (230) configurée pour délivrer un agent de réduction dans un tuyau d'échappement d'un moteur à combustion interne ;

un catalyseur de réduction de NOx (41) configuré pour enlever le NOx grâce à l'agent de réduction qui est délivré par la soupape d'addition, le catalyseur de réduction de NOx étant disposé sur un côté en aval d'échappement de la soupape d'addition dans le tuyau d'échappement ;

un dispositif de commande (80) comportant une unité de calcul de valeur instantanée configurée pour calculer une quantité d'alimentation instantanée de cible (QC) sur la base d'un état de fonctionnement de moteur, la quantité d'alimentation instantanée de cible étant une quantité d'alimentation en agent de réduction destinée à refroidir la soupape d'addition ; et

le dispositif de commande (80) comportant en outre une unité de commande configurée pour exécuter une commande de fonctionnement pour la soupape d'addition en utilisant une quantité d'alimentation de refroidissement de cible (TQc) comme quantité obtenue par une partie d'une différence entre une quantité d'alimentation de refroidissement de cible précédente (TQc[i]) et la quantité d'alimentation instantanée de cible, ladite partie étant ajoutée à la quantité d'alimentation de refroidissement de cible précédente, la quantité d'alimentation de refroidissement de cible étant une quantité d'alimentation en agent de réduction de cible pour le refroidissement de la soupape d'addition, la quantité d'alimentation de refroidissement de cible précédente étant la quantité d'alimentation de refroidissement de cible calculée pendant un calcul précédent, l'appareil de commande de gaz d'échappement étant **caractérisé en ce que**

l'unité de commande est configurée pour exécuter la commande de fonctionnement pour la soupape d'addition en utilisant la quantité d'alimentation instantanée de cible (QC) comme quantité d'alimentation de refroidissement de cible quand une température en tant qu'indice d'une température de la soupape d'addition est égale ou supérieure à une température prédéterminée et quand la quantité d'alimentation de refroidissement de cible précédente (TQc[i]) est « 0 ».

2. Appareil de commande de gaz d'échappement selon la revendication 1, dans lequel l'unité de commande est configurée pour

i) calculer une quantité d'alimentation de purification de cible (TQn) comme quantité d'alimentation en agent de réduction de cible pour la réduction de NOx par le catalyseur de réduction de NOx,

ii) exécuter la commande de fonctionnement pour la soupape d'addition de telle sorte que l'agent de réduction égal en quantité à la quantité d'alimentation de refroidissement de cible (TQc) est délivré quand la quantité d'alimentation de refroidissement de cible dépasse la quantité d'alimentation de purification de cible, et

iii) exécuter la commande de fonctionnement pour la soupape d'addition de telle sorte que l'agent de réduction égal en quantité à la quantité d'alimentation de purification de cible (TQn) est délivré quand la quantité d'alimentation de refroidissement de cible est égale ou inférieure à la quantité d'alimentation de purification de cible.

# FIG. 1

EP 3 109 426 B1

# FIG. 2

$$\boxed{\text{PURIFICATION SUPPLY AMOUNT CALCULATION PROCESSING}}$$

CALCULATE AMOUNT OF NOx DISCHARGED FROM INTERNAL COMBUSTION ENGINE (DISCHARGED NOx AMOUNT) BASED ON ENGINE OPERATION STATE — S11

CALCULATE TARGET PURIFICATION SUPPLY AMOUNT TQn BASED ON DISCHARGED NOx AMOUNT — S12

$$\boxed{\text{END}}$$

# FIG. 3

$$\boxed{\text{COOLING SUPPLY AMOUNT CALCULATION PROCESSING}}$$

CALCULATE TARGET INSTANTANEOUS SUPPLY AMOUNT QC BASED ON VEHICLE TRAVELING SPEED SPD, ENGINE ROTATION SPEED NE, AND ACCELERATOR OPERATION AMOUNT ACCP — S21

S22
PREVIOUS TARGET COOLING SUPPLY AMOUNT TQc[i]=0 AND COOLING WATER TEMPERATURE THW ≥ PREDETERMINED TEMPERATURE?

NO → S24
CALCULATE TARGET COOLING SUPPLY AMOUNT TQc THROUGH GRADUAL CHANGE PROCESSING

YES → S23
TARGET COOLING SUPPLY AMOUNT TQc ← TARGET INSTANTANEOUS SUPPLY AMOUNT QC

$$\boxed{\text{END}}$$

# FIG. 4

```
        ( OPERATION CONTROL PROCESSING )
                       │
                       ▼
              ╱─────────────────╲
             ╱   TARGET COOLING   ╲        S31
    ╱────────  SUPPLY AMOUNT TQc>TARGET  ────────╲   NO
    ╲          PURIFICATION SUPPLY               ╱───────┐
             ╲    AMOUNT TQn?    ╱                       │
              ╲─────────────────╱                        │
                       │ YES         S32                 │        S33
                       ▼                                 ▼
    ┌──────────────────────────────┐    ┌──────────────────────────┐
    │  FINAL SUPPLY AMOUNT Qf←TARGET│    │   FINAL SUPPLY AMOUNT     │
    │  COOLING SUPPLY AMOUNT TQc    │    │  Qf←TARGET PURIFICATION   │
    │                               │    │    SUPPLY AMOUNT TQn      │
    └──────────────────────────────┘    └──────────────────────────┘
                       │◄────────────────────────────┘
                       ▼
    ┌──────────────────────────────┐
    │  CONTROL OPERATION OF UREA    │
    │  ADDING VALVE BASED ON FINAL  │──S34
    │      SUPPLY AMOUNT Qf         │
    └──────────────────────────────┘
                       │
                       ▼
                (     END     )
```

# FIG. 5

[a] OPERATION SWITCH

ON

OFF

OPERATION STATE OF MEDIUM OR HIGHER LOAD

[b] INTERNAL COMBUSTION ENGINE

OPERATION

STOP

LOW-LOAD LOW-ROTATION STATE

[c] TARGET COOLING SUPPLY AMOUNT TQc

0

[d] COOLING WATER TEMPERATURE THW

PREDETERMINED TEMPERATURE

t11  t12    TIME

# FIG. 6

[a] OPERATION SWITCH

ON

OFF

[b] INTERNAL COMBUSTION ENGINE

OPERATION

STOP

[c] TARGET COOLING SUPPLY AMOUNT TQc

0

[d] COOLING WATER TEMPERATURE THW

PREDETERMINED TEMPERATURE

t21    t22    TIME

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003301737 A

- WO 2015049557 A1